# EUROPÄISCHE PATENTSCHRIFT

(11) **EP 1 137 831 B1**
(45) Veröffentlichungstag und Bekanntmachung des Hinweises auf die Patenterteilung: **10.03.2004**
(21) Anmeldenummer: 99952497.8
(22) Anmeldetag: 05.10.1999
(51) Int. Cl.: D01F 6/84, C08J 5/18, C08L 67/02

(54) **VERFAHREN ZUR VERBESSERUNG DER STANDZEIT VON FILAMENTEN, FASERN ODER FOLIEN AUF DER BASIS BIOLOGISCH ABBAUBARER POLYESTER**
METHOD FOR ENHANCING THE SERVICE LIFE OF FILAMENTS, FIBERS OR FOILS BASED ON BIODEGRADABLE POLYESTERS
PROCEDE POUR ALLONGER LA DUREE DE VIE DE FILAMENTS, DE FIBRES OU DE FEUILLES A BASE DE POLYESTER BIODEGRADABLES

(30) Priorität: 19.10.1998 DE 19847909
(43) Veröffentlichungstag der Anmeldung: 04.10.2001
(73) Patentinhaber: BASF AKTIENGESELLSCHAFT, 67056 Ludwigshafen (DE)
(72) Erfinder: WITT, Uwe, D-67112 Mutterstadt (DE); SKUPIN, Gabriel, D-67346 Speyer (DE)
(86) Internationale Anmeldenummer: PCT/EP1999/007377
(87) Internationale Veröffentlichungsnummer: WO 2000/023640

(56) Entgegenhaltungen:
- EP-A- 0 825 221
- WO-A-96/15173
- WO-A-96/21689
- DE-A- 3 939 721
- PATENT ABSTRACTS OF JAPAN vol. 1997, no. 07, 31. Juli 1997 (1997-07-31) & JP 09 074961 A (TORAY MONOFILAMENT CO LTD;SHOWA DENKO KK; SHOWA HIGHPOLYMER CO LTD), 25. März 1997 (1997-03-25)

## Beschreibung

Die vorliegende Erfindung betrifft ein Verfahren zur Verbesserung der Standzeit von Filamenten, Fasern oder Folien auf der Basis biologisch abbaubarer Polyester.

Kunststoffe, die als biologisch abbaubare Polymere qualifizieren sollen einerseits im Kompost möglichst rasch zu unbedenklichen Stoffen abgebaut werden. Um sie aber andererseits praktisch einsetzen zu können, sollen diese Kunststoffe sehr gute mechanische Eigenschaften wie hohe Festigkeit oder gute Reißdehnung aufweisen aber auch gute optische Eigenschaften zeigen.

Diese physikalischen Eigenschaften lassen sich zum einen durch die Struktur der Polymeren beeinflussen. So genügen beispielsweise kettenverlängerte oder verzweigte Polyester oder Polyesterderivate, wie sie in den WO 96/15173 bis 15176, 21689 bis 21692, 25446, 25448 oder der WO 98/12242 beschreiben wurden, bereits den meisten hohen mechanischen Anforderungen moderner Kunststoffe und sind biologisch abbaubar. Aliphatische biologisch abbaubare Polyester mit guten mechanischen Eigenschaften sind beispielsweise auch aus der EP-A2 569 143 bekannt. Teilweise gute mechanische Eigenschaften zeigen ferner Stärke enthaltende Mischungen.

Allgemein bekannt ist, daß sich die physikalischen Eigenschaften von Filamenten, Fasern oder Folien durch Verstrecken weiter verbessern lassen (Kunststoffhandbuch, Bd IV, Carl Hanser Verlag, 1969, S., 435, Lexikon Folientechnik, VCH Verlagsgesellschaft, Weinheim, S. 293, 325 bis S. 328). Biologisch abbaubare Polymere wurden ebenfalls bereits verstreckt, um ihre mechanischen Eigenschaften weiter zu verbessern (z.B. Fasern und Garne: WO 96/15173, Folien: EP-A2 569 143, EP-A2 683 207, WO 98/4619, 4626 und 4627). EP-A1 825 221 offenbart Folien aus aliphatischen'Polyestern, die gute mechanische Eigenschaften aufweisen und biologisch abbaubar sind, wobei der Verstreckungsgrad der Folien die mechanischen Eigenschaften, nicht jedoch die biologische Abbaubarkeit beeinflußt. Bei Untersuchungen an kristallinen aliphatischen Polyestern wurde aber gefunden, daß die biologische Abbaubarkeit von Folien von deren Dicke abhängt. Noch stärker hängt sie gemäß den Untersuchungsergebnissen jedoch von dem Grad der kristallinen Ordnung in dem Film ab. So wurde gefunden, daß bei einer gegebenen Filmdicke die biologische Abbaubarkeit mit zunehmender Orientierung abnimmt (Polymers for Advanced Technologies, Vol. 8, 146 bis 151 (1997).

Ein weiteres Problem biologisch abbaubarer Kunststoffe besteht in der Schere der Anforderungen, daß sie sehr rasch biologisch abbauen sollen, daß sie aber, sollen sie überhaupt von praktischer Bedeutung sein, eben gerade nicht biologisch abbauen dürfen, während sie verwendet werden. Sie müssen also eine Standzeit haben, die an den Verwendungszweck angepaßt ist.

Aufgabe der vorliegenden Erfindung war es daher, ein Verfahren zu entwickeln, mit dem die Standzeit von Filamenten, Fasern oder Folien auf der Basis biologisch abbaubarer Polymerer verbessert, d.h. verlängert, bzw. an den Verwendungszweck angepaßt, werden kann. Gleichzeitig sollte die biologische Abbaubarkeit nicht verschlechtert werden. Gleichzeitig sollten die Produkte ein hohes mechanisches und optisches Eigenschaftsniveau haben.

Demgemäß wurde ein Verfahren zur Verbesserung der Standzeit von Filamenten, Fasern oder Folien auf der Basis biologisch abbaubarer Polyester mit einem Molekulargewicht (Mₙ) im Bereich von 5000 bis 50000 g/mol, mit einer Viskositätszahl im Bereich von 50 bis 400 g/ml (gemessen in o-Dichlorbenzol/Phenol, Gew.-Verhältnis 50/50, bei einer Konzentration von 0,5 Gew.-% Polymer und einer Temperatur von 25°C) und einem Schmelzpunkt im Bereich von 60 bis 170°C, enthaltend als wesentliche Komponenten
A) eine Säurekomponente aus
   a1) 30 bis 95 mol-% mindestens einer aliphatischen oder mindestens einer cycloaliphatischen Dicarbonsäure oder deren esterbildende Derivate oder Mischungen davon
   a2) 5 bis 70 mol% mindestens einer aromatischen Dicarbonsäure oder deren esterbildendem Derivat oder Mischungen davon und
   a3) 0 bis 5 mol% einer sulfonatgruppenhaltigen Verbindung,
B) eine Diolkomponente ausgewählt aus mindestens einem C₂-bis C₁₂-Alkandiol und mindestens einem C₅- bis C₁₀-Cycloalkandiol oder Mischungen davon
und gewünschtenfalls darüber hinaus eine oder mehrere Komponenten ausgewählt aus
C) einer Komponente ausgewählt aus
   c1) mindestens einer Etherfunktionen enthaltenden Dihydroxyverbindung der Formel I

      HO-[(CH₂)ₙ-O]ₘ-H (I)

      in der n für 2, 3 oder 4 und m für eine ganze Zahl von 2 bis 250 stehen,
   c2) mindestens einer Hydroxycarbonsäure oder Formel IIa oder IIb

      HO-[-C(O)-G-O-]ₚH (IIa)

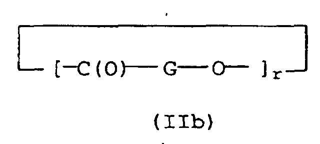

      in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino-C₂- bis C₁₂-alkanol oder mindestens einem Amino-C₅-bis C₁₀-cycloalkanol oder Mischungen davon
   c4) mindestens einem Diamino-C₁- bis C₈-Alkan
   c5) mindestens einem 2,2'-Bisoxazolins der allgemeinen Formel III 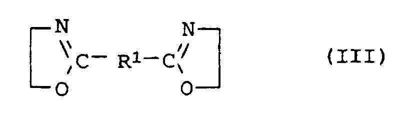 wobei R¹ eine Einfachbindung, eine (CH₂)_{z}-Alkylengruppe, mit z = 2, 3 oder 4, oder eine Phenylengruppe bedeutet
   c6) mindestens einer Aminocarbonsäure ausgewählt aus der Gruppe, bestehend aus den natürlichen Aminosäuren, Polyamiden mit einem Molekulargewicht von höchstens 18000g/mol, erhältlich durch Polykondensation einer Dicarbonsäure mit 4 bis 6 C-Atomen und einem Diamin mit 4 bis 10 C-Atomen, Verbindungen der Formeln IV a und IVb

      HO-[-C(O)-T-N(H)-]ₛH (IVa)

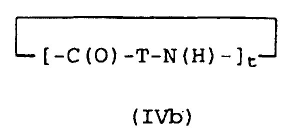

      in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ₙ-, wobei n eine ganze Zahl von 1 bis 12 bedeutet, -C(R²)H- und -C(R²)HCH₂, wobei R² für Methyl oder Ethyl steht,
      und Polyoxazolinen mit der wiederkehrenden Einheit V 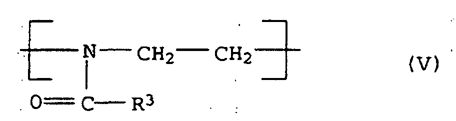 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
      oder Mischungen aus c1) bis c6)
      und
D) einer Komponente ausgewählt aus
   d1) mindestens einer Verbindung mit mindestens drei zur Esterbildung befähigten Gruppen,
   d2) mindestens eines Isocyantes
   d3) mindestens eines Divinylethers
   oder Mischungen aus d1) bis d3),
gefunden, bei dem die Filamente, Fasern oder Folien bei oder nach deren Herstellung verstreckt werden.

Unter Standzeit wird erfindungsgemäß der Zeitraum von der Herstellung der verstreckten Filamente, Fasern oder Folien bis zu deren Kompostierung verstanden. Die Standzeit schließt also erfindungsgemäß den Zeitraum der Lagerung und der tatsächlichen Verwendung mit ein. Da für die meisten biologisch abbaubaren: Polymeren die Standzeiten zu gering sind, werden die Standzeiten nach dem erfindungsgemäßen Verfahren bevorzugt verlängert. Beispielsweise können die Standzeiten mittels des erfindungsgemäßen Verfahrens um das 1,1- bis 1,4-fache dessen betragen das die Filamente, Fasern oder Folien haben, die nicht dem erfindungsgemäßen Verfahren unterworfen wurden. Bevorzugt werden die Standzeiten gegenüber den unbehandelten Filamenten, Fasern oder Folien um mindestens das 1,5-fache verlängert. Insbesondere beträgt die Standzeitverlängerung mindestens das 2-fache.

Unter einem Filament wird im allgemeinen eine praktisch endlose Faser verstanden, die nach verschiedenen Verfahren, beispielsweise durch Verspinnen, erzeugt werden kann (z.B. DIN 60 001 T2, Dez. 1974). Filamente sind im allgemeinen Bestandteil von Garnen, beispielsweise Monofil- oder Multifilgarn, oder Kabeln. Fasern sind langgestreckte Aggregate, deren Moleküle oder Kristallite in der Molekül-Längsrichtung oder längs einer Gittergeraden im wesentlichen überall gleichgerichtet sind. Fasern sind von begrenzter Länge und können einzeln oder in gebündelter Form vorliegen (z.B. DIN 60 001 T1, Aug. 1970). (Praktisch unbegrenzt lange Fasern werden zu den Filamenten gezählt.) Folien sind dünne flächige flexible, meist aufwickelbare Bahnen. Besonders dünne Folien werden im allgemeinen Filme genannt. Folien sind z.B. durch Gießen, Kalandrieren oder Extrudieren herstellbar. Mittels Blasformen sind z.B. Schlauch- oder Blasfolien zugänglich.

Prinzipiell kommen für das erfindungsgemäße Verfahren alle biologisch abbaubaren Polyester mit einem Molekulargewicht (Mₙ) im Bereich von 5000 bis 50000 g/mol, mit einer Viskositätszahl im Bereich von 50 bis 400 g/ml (gemessen in o-Dichlorbenzol/Phenol, Gew.-Verhältnis 50/50, bei einer Konzentration von 0,5 Gew.-% Polymer und einer Temperatur von 25°C) und einem Schmelzpunkt im Bereich von 60 bis 170°C, enthaltend als wesentliche Komponenten
A) eine Säurekomponente aus
   a1) 30 bis 95 mol-% mindestens einer aliphatischen oder mindestens einer cycloaliphatischen Dicarbonsäure oder deren esterbildende Derivate oder Mischungen davon
   a2) 5 bis 70 mol% mindestens einer aromatischen Dicarbonsäure oder deren esterbildendem Derivat oder Mischungen davon und
   a3) 0 bis 5 mol% einer sulfonatgruppenhaltigen Verbindung,
B) eine Diolkomponente ausgewählt aus mindestens einem C₂-bis C₁₂-Alkandiol und mindestens einem C₅- bis C₁₀-Cycloalkandiol oder Mischungen davon
und gewünschtenfalls darüber hinaus eine oder mehrere Komponenten ausgewählt aus
C) einer Komponente ausgewählt aus
   c1) mindestens einer Etherfunktionen enthaltenden Dihydroxyverbindung der Formel I

      HO-[(CH₂)ₙ-O]ₘ-H (I)

      in der n für 2, 3 oder 4 und m für eine ganze Zahl von 2 bis 250 stehen,
   c2) mindestens einer Hydroxycarbonsäure oder Formel IIa oder IIb

      HO-[-C(O)-G-O-]ₚH (IIa)

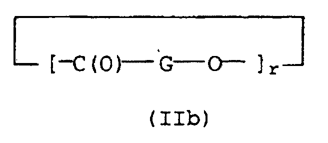

      in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino-C₂- bis C₁₂-alkanol oder mindestens einem Amino-C₅-bis C₁₀-cycloalkanol oder Mischungen davon
   c4) mindestens einem Diamino-C₁- bis C₈-Alkan
   c5) mindestens einem 2,2'-Bisoxazolins der allgemeinen Formel III 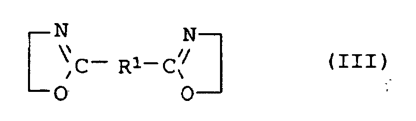 wobei R¹ eine Einfachbindung, eine (CH₂)_{z}-Alkylengruppe, mit z = 2, 3 oder 4, oder eine Phenylengruppe bedeutet
   c6) mindestens einer Aminocarbonsäure ausgewählt aus der Gruppe, bestehend aus den natürlichen Aminosäuren, Polyamiden mit einem Molekulargewicht von höchstens 18000g/mol, erhältlich durch Polykondensation einer Dicarbonsäure mit 4 bis 6 C-Atomen und einem Diamin mit 4 bis 10 C-Atomen, Verbindungen der Formeln IV a und IVb

      HO-[-C(O)-T-N(H)-]ₛH (IVa)

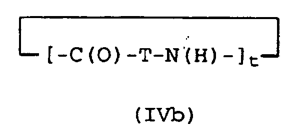

      in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ₙ-, wobei n eine ganze Zahl von 1 bis 12 bedeutet, -C(R²)H- und -C(R²)HCH₂, wobei R² für Methyl oder Ethyl steht,
      und Polyoxazolinen mit der wiederkehrenden Einheit V 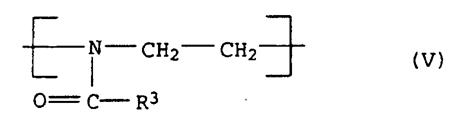 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
      oder Mischungen aus c1) bis c6)
      und
D) einer Komponente ausgewählt aus
   d1) mindestens einer Verbindung mit mindestens drei zur Esterbildung befähigten Gruppen,
   d2) mindestens eines Isocyantes
   d3) mindestens eines Divinylethers
      oder Mischungen aus d1) bis d3),
in Betracht. Darunter fallen sowohl Polyester unterschiedlichster Struktur als auch Mischungen unterschiedlicher biologisch abbaubarer Polyester. Selbstverständlich kommen des weiteren Filamente, Fasern oder Folien in Betracht, die neben den biologisch abbaubaren Polyestern einen oder mehrere Zusatzstoffe enthalten.

Zu biologisch abbaubaren Polymeren zählen solche natürlichen Ursprungs aber auch synthetisch hergestellte Polymere. Polymere natürlichen Ursprungs sind z.B. Schellack, Stärke oder Cellulose. Diese können mit physikalischen und/oder chemischen Methoden modifiziert sein. Zu Polymeren natürlichen Ursprungs zählt Stärke, thermoplastisch verarbeitbare Stärke oder Stärkeverbindungen wie Stärkeether oder Stärkeester. Daneben kommen aber auch Cellulosester in Betracht.

Polymere Umsetzungsprodukte der Milchsäure können als biologisch abbaubare Polymere verwendet werden. Diese sind an sich bekannt oder können nach an sich bekannten Verfahren hergestellt werden. Neben Polylactid können auch Co- oder Blockcopolymere auf der Basis von Milchsäure und weiteren Monomeren verwendet werden. Meist werden lineare Polylactide eingesetzt. Es können aber auch verzweigte Milchsäurepolymerisate verwendet werden. Als Verzweiger können z.B. mehrfunktionelle Säuren oder Alkohole dienen. Beispielhaft können Polylactide genannt werden, die im wesentlichen aus Milchsäure oder deren C₁- bis C₄-Alkylester oder deren Mischungen sowie mindestens einer aliphatischen C₄- bis C₁₀-Dicarbonsäure und mindestens einem C₃- bis C₁₀-Alkanol mit drei bis fünf Hydroxygruppen erhältlich sind.

Beispiele biologisch abbaubarer Polymerer, aus denen Filamente, Fasern oder Folien erhältlich sind, sind darüber hinaus aliphatische Polyester. Zu diesen zählen Homopolymere aliphatischer Hydroxycarbonsäuren oder Lactone aber auch Copolymere oder Blockcopolymere unterschiedlicher Hydroxycarbonsäuren oder Lactonen oder deren Mischungen. Diese aliphatischen Polyester können daneben als Bausteine Diole und/oder Isocyanate enthalten. Darüber hinaus können die aliphatischen Polyester auch Bausteine enthalten, die sich von tri- oder mehrfunktionellen Verbindungen wie Epoxiden, Säuren oder Triolen ableiten. Letzere Bausteine können einzeln oder es können mehrere davon oder auch zusammen mit den Diolen und/oder Isocyananten in den aliphatischen Polyestern enthalten sein.

Verfahren zur Herstellung aliphatischer Polyester sind dem Fachmann bekannt. Die aliphatischen Polyester weisen im allgemeinen Molekulargewichte (Zahlenmittelwert) im Bereich von 10 000 bis 100 000 g/mol auf.

Zu den aliphatischen Polyestern zählt Polycaprolacton.

Poly-3-hydroxybutansäureester und Copolymere der 3-Hydroxybutansäure oder deren Mischungen mit der 4-Hydroxybutansäure und der 3-Hydroxyvaleriansäure, insbesondere einem Gewichtsanteil von bis zu 30, bevorzugt bis zu 20 Gew.-% der letztgenannten Säure, sind aliphatische Polyester. Zu den geeigneten Polymeren dieses Typs zählen auch die mit R-stereospezifischer Konfiguration wie sie aus der WO 96/09402 bekannt sind. Polyhydroxybutansäureester oder deren Copolymeren können mikrobiell hergestellt werden. Verfahren zur Herstellung aus verschiedenen Bakterien und Pilzen sind z.B. den Nachr. Chem Tech. Lab. 39, 1112 - 1124 (1991) zu entnehmen, ein Verfahren zur Herstellung sterospezifischer Polymerer ist aus der WO 96/09402 bekannt.

Des weiteren können auch Blockcopolymere aus den genannten Hydroxycarbonsäuren oder Lactonen, deren Mischungen, Oligomeren oder Polymeren eingesetzt werden.

Weitere aliphatische Polyester, sind solche, die aus aliphatischen oder cycloaliphatischen Dicarbonsäuren oder deren Mischungen und aliphatischen oder cycloaliphatischen Diolen oder deren Mischungen aufgebaut sind. Erfindungsgemäß können sowohl statistische als auch Blockcopolymere verwendet werden.

Die erfindungsgemäß geeigneten aliphatischen Dicarbonsäuren haben im allgemeinen 2 bis 10 Kohlenstoffatome, vorzugsweise 4 bis 6 Kohlenstoffatome. Sie können sowohl linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, Adipinsäure, Pimelinsäure, Acelainsäure, Sebacinsäure; Fumarsäure, 2,2-Dimethylglutarsäure, Suberinsäure, 1,3-Cyclopentandicarbonsäure, 1,4-Cyclohexandicarbonsäure, 1,3-Cyclohexandicarbonsäure, Diglykolsäure, Itaconsäure, Maleinsäureund 2,5-Norbornandicarbonsäure, worunter Adipinsäure bevorzugt ist.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Beispiele der aliphatischen Polyester sind aliphatische Copolyester wie sie in der WO 94/14870 beschrieben sind, insbesondere aliphatische Copolyester aus Bernsteinsäure, dessen Diester oder deren Mischungen mit anderen aliphatischen Säuren bzw. Diestern wie Glutarsäure und Butandiol oder Mischungen aus diesem Diol mit Ethylenglycol, Propandiol oder Hexandiol oder deren Mischungen.

Aliphatische Polyester dieser Art weisen im allgemeinen Molekulargewichte (Zahlenmittelwert) im Bereich von 10 000 bis 100 000 g/mol auf.

Ebenso können aliphatische Polyester statistische oder Block-Copolyester sein, die weitere Monomere enthalten. Der Anteil der weiteren Monomeren beträgt in der Regel bis zu 10 Gew.-%. Comonomere sind Hydroxcarbonsäuren oder Lactone oder deren Mischungen.

Selbstverständlich können auch Mischungen aus zwei oder mehr Comonomeren und/oder weiteren Bausteinen, wie Epoxiden oder mehrfunktionellen aliphatischen oder aromatischen Säuren oder mehrfunktionellen Alkoholen zur Herstellung der aliphatischen Polyester eingesetzt werden.

Des weiteren können die Filamente, Fasern oder Folien auf teilaromatischen Polyestern basieren. Darunter sollen erfindungsgemäß auch Polyesterderivate verstanden werden wie Polyetherester, Polyesteramide oder Polyetheresteramide. Zu den geeigneten biologisch abbaubaren teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften , WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht wie Blends von teilaromatischen Polyestern mit Stärke oder modifizierter Stärke, Celluloseestern oder Polylactid.

Zu den in den erfindungsgemäßen Verfahren einsetzbaren teilaromatischen Polyestern zählen Polyester, die als wesentliche Komponenten
A) eine Säurekomponente aus
   a1) 30 bis 95 mol-% mindestens einer aliphatischen oder mindestens einer cycloaliphatischen Dicarbonsäure oder deren esterbildende Derivate oder Mischungen davon
   a2) 5 bis 70 mol% mindestens einer aromatischen Dicarbonsäure oder deren esterbildendem Derivat oder Mischungen davon und
   a3) 0 bis 5 mol% einer sulfonatgruppenhaltigen Verbindung,
B) eine Diolkomponente ausgewählt aus mindestens einem C₂-bis C₁₂-Alkandiol und mindestens einem C₅- bis C₁₀-Cycloalkandiol oder Mischungen davon
und gewünschtenfalls darüber hinaus eine oder mehrere Komponenten ausgewählt aus
C) einer Komponente ausgewählt aus
   c1) mindestens einer Etherfunktionen enthaltenden Dihydroxyverbindung der Formel I

      HO-[(CH₂)ₙ-O]ₘ-H (I)

      in der n für 2, 3 oder 4 und m für eine ganze Zahl von 2 bis 250 stehen
   c2) mindestens einer Hydroxycarbonsäure oder Formel IIa oder IIb

      HO-[-C(O)-G-O- ]ₚH (IIa)

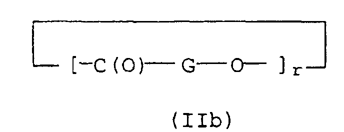

      in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino-C₂- bis C₁₂-alkanol oder mindestens einem Amino-C₅-bis C₁₀-cycloalkanol oder Mischungen davon
   c4) mindestens einem Diamino-C₁-bis C₈-Alkan
   c5) mindestens einem 2,2'-Bisoxazolins der allgemeinen Formel III 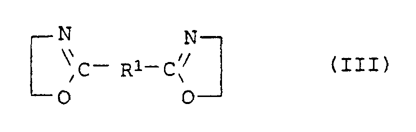 wobei R¹ eine Einfachbindung, eine (CH₂)_{z}-Alkylengruppe, mit z = 2, 3 oder 4, oder eine Phenylengruppe bedeutet
   c6) mindestens einer Aminocarbonsäure ausgewählt aus der Gruppe, bestehend aus den natürlichen Aminosäuren, Polyamiden mit einem Molekulargewicht von höchstens 18000g/mol, erhältlich durhc Polykondensation einer Dicarbonsäure mit 4 bis 6 C-Atomen und einem Diamin mit 4 bis 10 C-Atomen, Verbindungen der Formeln IV a und IVb

      HO-[-C(O)-T-N(H)-]ₛH (IVa)

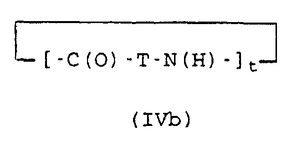

      in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ₙ-, wobei n eine ganze Zahl von 1 bis 12 bedeutet, -C(R²)H- und -C(R²)HCH₂, wobei R² für Methyl oder Ethyl steht,
   und Polyoxazolinen mit der wiederkehrenden Einheit V 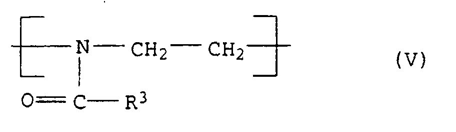 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
   oder Mischungen aus c1 bis c6
   und
D) einer Komponente ausgewählt aus
   d1) mindestens einer Verbindung mit mindestens drei zur Esterbildung befähigten Gruppen,
   d2) mindestens eines Isocyantes
   d3) mindestens eines Divinylethers
   oder Mischungen aus d1) bis d3) enthalten.

Die Säurekomponente A der bevorzugten teilaromatischen Polyester enthält von 30 bis 70, insbesondere von 40 bis 60 mol% a1 und von 30 bis 70, insbesondere von 40 bis 60 mol% a2.

Als aliphatische, bzw. cycloaliphatische Säuren und die entsprechenden Derivate a1 kommen die oben genannten in Betracht. Besonders bevorzugt wird Adipinsäure oder Sebacinsäure deren jeweiligen esterbildenden Derivate oder Mischungen davon eingesetzt. Besonders bevorzugt wird Adipinsäure oder deren esterbildende Derivate, wie deren Alkylester oder deren Mischungen eingesetzt.

Als aromatische Dicarbonsäure a2 sind im allgemeinen solche mit 8 bis 12 Kohlenstoffatomen und vorzugsweise solche mit 8 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₆-Alkylester, z.B. Dimethyl-, Diethyl-, Di-n-propyl-, Di-iso-propyl, Di-n-butyl-, Di-iso-butyl, Di-t-butyl, Di-n-pentyl-, Di-iso-pentyl oder Di-n-hexylester zu nennen. Die Anhydride der Dicarbonsäuren a2 sind ebenso geeignete esterbildende Derivate.

Prinzipiell können jedoch auch aromatische Dicarbonsäuren a2 mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Als sulfonatgruppenhaltige Verbindung setzt man üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulphoisophthalsäure oder deren Mischungen, besonders bevorzugt das Natriumsalz.

Nach einer der bevorzugten Ausführungsformen enthält die Säurekomponente A von 40 bis 60 mol% a1, von 40 bis 60 mol% a2 und von 0 bis 2 mol% a3. Nach einer weiteren bevorzugten Ausführungsform enthält die Säurekomponente A von 40 bis 59,9 mol-% a1, von 40 bis 59,9 mol-% a2 und von 0,1 bis 1 mol-% a3, insbesondere von 40 bis 59,8 mol-% a1, von 40 bis 59,8 mol-% a2 und von 0,2 bis 0,5 mol-% a3.

Im allgemeinen werden die Diole B unter verzweigten oder linearen Alkandiolen mit 2 bis 12 Kohlenstoffatomen, bevorzugt 4 bis 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl-1,3-propandiol, 2,2,4-Trimethyl-1,6-hexandiol, insbesondere Ethylenglykol, 1,3-Propandiol, 1,4-Butandiol und 2,2-Dimethyl-1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Es können auch Mischungen unterschiedlicher Alkandiole verwendet werden.

Abhängig davon ob ein Überschuß an Säure- oder OH-Endgruppen gewünscht wird, kann entweder die Komponente A oder die Komponente B im Überschuß eingesetzt werden. Nach einer bevorzugten Ausführungsform kann das Molverhältnis der eingesetzten Komponenten A zu B im Bereich von 0,4:1 bis 1,5:1, bevorzugt im Bereich von 0,6:1 bis 1,1:1 liegen.

Neben den Komponenten A und B können die Polyester, auf denen die Filamente, Fasern oder Folien basieren, die im erfindungsgemäßen Verfahren verwendet werden können, weitere Komponenten enthalten.

Als Dihydroxyverbindungen c1 setzt man bevorzugt Diethylenglykol, Triethylenglykol, Polyethylenglykol, Polypropylenglykol und Polytetrahydrofuran (Poly-THF), besonders bevorzugt Diethylenglykol, Triethylenglykol und Polyethylenglykol, ein, wobei man auch Mischungen davon oder Verbindungen, die unterschiedliche Variablen n aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid, besonders bevorzugt ein Polymer auf Basis von Polyethylenglykol, mit unterschiedlichen Variablen n, wobei Einheiten gebildet aus Ethylenoxid überwiegen, einsetzen kann. Das Molekulargewicht (Mₙ) des Polyethylenglykols wählt man in der Regel im Bereich von 250 bis 8000, bevorzugt von 600 bis 3000 g/mol.

Nach einer der bevorzugten Ausführungsformen können beispielsweise von 15 bis 98, bevorzugt 60 bis 99,5 mol% der Diole B und 0,2 bis 85, bevorzugt 0,5 bis 30 mol% der Dihydroxyverbindungen c1, bezogen auf die molare Menge von B und c1, für die Herstellung der teilaromatischen Polyester verwendet werden.

In einer bevorzugten Ausführungsform setzt man als Hydroxycarbonsäure c2) ein: Glycolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4-dioxan-2,5-dion), p-Hydroxybenzoesäure sowie deren Oligomere und Polymere wie 3-Polyhydroxybuttersäure, Polyhydroxyvaleriansäure, Polylactid (beispielsweise als EcoPLA® (Fa. Cargill) erhältlich) sowie eine Mischung aus 3-Polyhydroxybuttersäure und Polyhydroxyvaleriansäure (letzteres ist unter dem Namen Biopol® von Zeneca erhältlich), besonders bevorzugt für die Herstellung von teilaromatischen Polyester die niedermolekularen und cyclischen Derivate davon.

Die Hydroxycarbonsäuren können beispielsweise in Mengen von 0,01 bis 50, bevorzugt von 0,1 bis 40 Gew.-% bezogen auf die Menge an A und B verwendet werden.

Als Amino-C₂-C₁₂-alkanol oder Amino-C₅-C₁₀-cyloalkanol (Komponente c3), wobei hierunter auch 4-Aminomethylcyclohexanmethanol fallen soll, setzt man bevorzugt Amino-C₂-C₆-alkanole wie 2-Aminoethanol, 3-Aminopropanol, 4-Aminobutanol, 5-Aminopentanol, 6-Aminohexanol sowie Amino-C₅-C₆-cyloalkanole wie Aminocyclopentanol und Aminocyclohexanol oder Mischungen davon ein.

Als Diamino-C₁-C₈-alkan (Komponente c4) setzt man bevorzugt Diamino-C₄-C₆-alkane ein wie 1,4-Diminobutan, 1,5-Diaminopentan und 1,6-Diaminohexan (Hexamethylendiamin, "HMD").

Nach einer bevorzugten Ausführungsform kann von 0,5 bis 99,5, bevorzugt von 70 bis 98,0 mol% der Diolkomponente B, 0,5 bis 99,5, bevorzugt 0,5 bis 50 mol% c3 und von 0 bis 50, bevorzugt von 0 bis 35 mol% c4, bezogen auf die Molmenge von B, c3 und c4, für die Herstellung der teilaromatischen Polyester eingesetzt werden.

Die 2,2'-Bisoxazoline c5 der allgemeinen Formel III sind im allgemeinen erhältlich durch das Verfahren aus Angew. Chem. Int. Edit., Vol. 11 (1972), S. 287-288. Besonders bevorzugte Bisoxazoline sind solche, in denen R¹ eine Einfachbindung, eine (CH₂)_{q}-Alkylengruppe, mit q = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt.

Zur Herstellung der teilaromatischen Polyester können beispielsweise von 70 bis 98 mol% B, 1 bis 30 mol% c3 und 0,5 bis 30 mol% c4 und 0,5 bis 30 mol% c5, jeweils bezogen auf die Summe der Molmengen der Komponenten B, c3, c4 und c5, verwendet werden. Nach einer anderen bevorzugten Ausführungsform ist es möglich von 0,1 bis 5, bevorzugt 0,2 bis 4 Gew.-% c5, bezogen auf das Gesamtgewicht von A und B, einzusetzen.

Als Komponente c6 können natürliche Aminocarbonsäuren verwendet werden. Zu diesen zählen Valin, Leucin, Isoleucin, Threonin, Methionin, Phenylalanin, Tryptophan, Lysin, Alanin, Arginin, Aspartamsäure, Cystein, Glutaminsäure, Glycin, Histidin, Prolin, Serin, Tyrosin, Asparagin oder Glutamin.

Bevorzugte Aminocarbonsäuren der, allgemeinen Formeln IVa und IVb sind die, worin s eine ganze Zahl von 1 bis 1000 und t eine ganze Zahl von 1 bis 4, bevorzugt 1 oder 2 bedeuten und T ausgewählt ist aus der Gruppe Phenylen und -(CH₂)ₙ-, wobei n 1, 5 oder 12 bedeutet.

Ferner kann c6 auch ein Polyoxazolin der allgemeinen Formel V sein. C6 kann aber auch eine Mischung unterschiedlicher Aminocarbonsäuren und/oder Polyoxazoline sein.

Nach einer bevorzugten Ausführungsform kann c6 in Mengen von 0,01 bis 50, bevorzugt von 0,1 bis 40 Gew.-%, bezogen auf die Gesamtmenge der Komponenten A und B, eingesetzt werden.

Als weitere Komponenten, die optional zur Herstellung der teilaromatischen Polyester eingesetzt werden können, zählen Verbindungen d1, die mindestens drei zur Esterbildung befähigte Gruppen enthalten.

Die Verbindungen d1 enthalten bevorzugt drei bis zehn funktionelle Gruppen, welche zur Ausbildung von Esterbindungen fähig sind. Besonders bevorzugte Verbindungen d1 haben drei bis sechs funktionelle Gruppen dieser Art im Molekül, insbesondere drei bis sechs Hydroxylgruppen und/oder Carboxylgruppen. Beispielhaft seien genannt:
Weinsäure, Citronensäure, Äpfelsäure;
Trimethylolpropan, Trimethylolethan;
Pentaerythrit;
Polyethertriole;
Glycerin;
Trimesinsäure;
Trimellitsäure, -anhydrid;
Pyromellitsäure, -dianhydrid und
Hydroxyisophthalsäure.

Die Verbindungen d1 werden in der Regel in Mengen von 0,01 bis 5, bevorzugt 0,05 bis 4 mol%, bezogen auf die Komponente A eingesetzt.

Als Komponente d2 werden ein oder eine Mischung unterschiedlicher Isocyanate eingesetzt. So können aromatische oder aliphatische Diisocyanate eingesetzt werden. Es können aber auch höher funktionelle Isocyanate verwendet werden.

Unter einem aromatischen Diisocyanat d2 werden im Rahmen der vorliegenden Erfindung vor allem

Toluylen-2,4-diisocyanat, Toluylen-2,6-diisocyanat, 2,2'-Diphenylmethandiisocyanat, 2,4'-Diphenylmethandiisocyanat, 4,4'-Diphenylmethandiisocyanat, Naphthylen-1,5-diisocyanat oder Xylylen-diisocyanat verstanden.

Darunter werden 2,2'-, 2,4'- sowie 4,4'-Diphenylmethandiisocyanat als Komponente d2 besonders bevorzugt. Im Allgemeinen werden letztere Diisocyanate als Mischung eingesetzt.

Als dreikerniges Isocyanat d2 kommt auch Tri(4-isocyanophenyl)methan in Betracht. Die mehrkernigen aromatischen Diisocyanate fallen beispielsweise bei der Herstellung von ein-oder zweikernigen Diisocyanaten an.

In untergeordneten Mengen, z.B. bis zu 5 Gew.-%, bezogen auf das Gesamtgewicht der Komponente d2, kann die Komponente d2 auch Urethiongruppen, beispielsweise zum Verkappen der Isocyanatgruppen, enthalten.

Zu den bevorzugten Isocyanuraten zählen die aliphatischen Isocyanurate, wie Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat, ableiten. Dabei können die Alkylendiisocyanate sowohl linear als auch verzweigt sein. Besonders bevorzugt werden Diisocyanurate, die auf n-Hexamethylendiisocyanat basieren.

Im allgemeinen wird die Komponente d2 in Mengen von 0,01 bis 5, bevorzugt 0,05 bis 4 mol.-% bezogen auf die Summe der Molmengen von A und B verwendet.

Als Divinylether d3 kann man im allgemeinen alle üblichen und kommerziell erhältlichen Divinylether einsetzen. Bevorzugt verwendet werden 1,4-Butandiol-divinylether, 1,6-Hexandiol-divinylether oder 1,4-Cyclohexandimethanol-divinylether oder Mischungen davon.

Bevorzugt werden die Divinylether in Mengen von 0,01 bis 5, insbesondere von 0,2 bis 4 Gew.-%, bezogen auf das Gesamtgewicht von A und B, eingesetzt.

Beispiele bevorzugter teilaromatischer Polyester basieren auf den folgenden Komponenten
A, B, d1
A, B, d2
A, B, d1, d2
A, B, d3
A, B, c1
A, B, c1, d3
A, B, c3, c4
A, B, c3, c4, c5
A, B, d1, c3, c5
A, B, c3, d3
A, B, c3, d1
A, B, c1, c3, d3
A, B, c2

Darunter sind teilaromatische Polyester, die auf A, B, d1 oder A, B, d2 oder auf A, B, d1, d2 basieren besonders bevorzugt. Nach einer anderen bevorzugten Ausführungsform basieren die teilaromatischen Polyester auf A, B, c3, c4, c5 oder A, B, d1, c3, c5.

Die Herstellung der teilaromatischen Polyester ist an sich bekannt oder kann nach an sich bekannten Methoden erfolgen.

So kann man beispielsweise die Umsetzung von Dimethylestern der Säurekomponente A mit der Diolkomponente B ("Umesterung") bei Temperaturen im Bereich von 160 bis 260°C in der Schmelze bei Atmosphärendruck vorteilhaft unter Inertgasatmosphäre durchführen.

Üblicherweise erfolgt die Herstellung der teilaromatischen Polyester unter Zugabe von geeigneten, an sich bekannten Katalysatoren wie Metallverbindungen auf der Basis folgender Elemente wie Ti, Ge, Zn, Fe, Mn, Co, Zr, V, Ir, La, Ce, Li, und Ca, bevorzugt metallorganische Verbindungen auf der Basis dieser Metalle wie Salze organischer Säuren, Alkoxide, Acetylacetonate und ähnliches, insbesondere bevorzugt auf Basis von Zink, Zinn und Titan. Beispielhaft seien genannt: Dibutoxydiacetoxytitan, Tetrabutylorthotitanat und Zink(II)-acetat.

Das Gewichtsverhältnis von Katalysator zu biologisch abbaubaren Polyester P1 liegt üblicherweise im Bereich von 0,01:100 bis 3:100, vorzugsweise von 0,05:100 bis 2:100, wobei bei hochaktiven Titanverbindungen auch kleinere Mengen eingesetzt werden können wie 0,0001:100.

Der Katalysator kann gleich zu Beginn der Reaktion, unmittelbar kurz vor der Abtrennung des überschüssigen Diols oder gewünschtenfalls auch in mehreren Portionen verteilt während der Herstellung der biologisch abbaubaren Polyester P1 eingesetzt werden. Gewünschtenfalls können auch verschiedene Katalysatoren oder auch Gemische davon eingesetzt werden.

Bei Verwendung von Dicarbonsäuren oder deren Anhydriden als Komponente A kann deren Veresterung mit Komponente B vor, gleichzeitig oder nach der Umesterung stattfinden. In einer bevorzugten Ausführungsform verwendet man das in der DE-A 23 36 026 beschriebene Verfahren zur Herstellung modifizierter Polyalkylenterephthalate.

Nach der Umsetzung der Komponenten A und B wird in der Regel unter vermindertem Druck oder in einem Inertgasstrom, beispielsweise aus Stickstoff, bei weiterem Erhitzen auf eine Temperatur im Bereich von 180 bis 260°C die Polykondensation bis zum gewünschten Molekulargewicht durchgeführt.

Um unerwünschte Abbau- und/oder Nebenreaktionen zu vermeiden, kann man in dieser Verfahrensstufe gewünschtenfalls auch Stabilisatoren zusetzen. Solche Stabilisatoren sind beispielsweise die in der EP-A 13 461, US 4,328,049 oder in B. Fortunato et al., Polymer Vol. 35, Nr. 18, S. 4006 bis 4010, 1994, Butterworth-Heinemann Ltd., beschriebenen Phosphor-Verbindungen. Diese können zum Teil auch als Deaktivatoren der oben beschriebenen Katalysatoren wirken. Beispielhaft seien genannt: Organophosphite, phosphonige Säure und phosphorige Säure. Als Verbindungen, die nur als Stabilisatoren wirken seien beispielhaft genannt: Trialkylphosphite, Triphenylphosphit, Trialkylphosphate, Triphenylphosphat und Tocopherol (Vitamin E; beispielsweise als Uvinul®2003AO (BASF) erhältlich). Die Umsetzung mit einer oder mehreren der weiteren Komponenten C und/oder D kann sowohl zu Anfang der Umsetzung als auch nach der Veresterungs- bzw. Umesterungsstufe erfolgen.

Dabei kann die Umsetzung je nach Art der zusätzlichen Komponente in Lösung oder in der Schmelze vorgenommen werden. Als Lösungsmittel eignen sich inerte Lösungsmittel wie Toluol, Methylethylketon oder Dimethylformamid. In der Regel erfolgt die Umsetzung unter Inertgasatmosphäre, gewünschtenfalls auch unter vermindertem Druck. Man kann sowohl diskoninuierlich als auch kontinuierlich, beispielsweise in, Rührkesseln oder (Reaktions-)Extrudern, arbeiten. Je nach zugesetzter Komponente und je nachdem ob die Reaktion in der Schmelze oder in einem Lösungsmittel ausgeführt wird, liegen die Umsetzungstemperaturen in der Regel im Bereich von 80 bis 260°C, wobei die Temperaturen in der Schmelze bevorzugt im allgemeinen im Bereich von 120 bis 240°C und in Lösung im allgemeinen im Bereich von 80 bis 150°C liegen.

Bei der Umsetzung mit den weiteren Komponenten C und/oder D kann es vorteilhaft sein, weitere Katalysatoren zuzugeben. Diese können beispielsweise die oben Genannten sein.

Die bevorzugten teilaromatischen Polyester sind charakterisiert durch ein Molekulargewicht (Mn) im Bereich von 5000 bis 50000,insbesondere im Bereich von 10000 bis 40000 g/mol, mit einer Viskositätszahl im Bereich von 50 bis 400, insbesondere im Bereich von 100 bis 300 g/ml( gemessen in o-Dichlorbenzol/Phenol; Gew.-Verhältnis 50/50, bei einer Konzentration von 0,5 Gew.-% Polymer und einer Temperatur von 25 °C) und einem Schmelzpunkt im Bereich von 60 bis 170, bevorzugt im Bereich von 80 bis 150°C.

Die biologisch abbaubaren Polyester können Zusatzstoffe enthalten, die man während des Polymerisationsvorganges in irgendeine Stufe oder nachträglich, beispielsweise in eine Schmelze der biologisch abbaubaren Polyester einarbeiten kann. Beispielhaft werden Stabilisatoren, Neutralisationsmittel, Gleit- und Trennmittel, Antiblockmittel, Nukelierungsmittel, Farbstoffe oder Füllstoffe genannt.

Bezogen auf die biologisch abbaubaren Polymere kann man von 0 bis 80 Gew.-% Zusatzstoffe zusetzen. Geeignete Zusatzstoffe sind beispielsweise Ruß, Ligninpulver, Cellulosefasern, Naturfasern wie Sisal und Hanf, Eisenoxide, Tonmineralien, Erze, Calciumcarbonat, Calciumsulfat, Bariumsulfat und Titandioxid, Stabilisatoren wie Tocopherol (Vitamin E), organische Phosphorverbindungen, Mono-, Di- und Polyphenole, Hydrochinone, Diarylamine, Thioether. Als Nukleierungsmittel kommt z.B. Talkum in Betracht. Gleit- und Formtrennmittel auf Basis von Kohlenwasserstoffen, Fettalkoholen, höheren Carbonsäuren, Metallsalzen höherer Carbonsäuren wie Calcium- oder Zinkstearat, oder Montanwachsen können auch als Zusatzstoffe enthalten sein. Solche Stabilisatoren etc. sind in Kunststoff-Handbuch, Bd. 3/1, Carl Hanser Verlag, München, 1992, S. 24 bis 28 ausführlich beschrieben.

Die erfindungsgemäßen Filamente, Fasern oder Folien werden erfindungsgemäß bei oder nach ihrer Herstellung verstreckt. Die Filamente oder Fasern werden im allgemeinen monoaxial verstreckt. Folien können sowohl monoaxial als auch biaxial gereckt werden. Im allgemeinen beträgt das Reckverhältnis in der Längsrichtung mindestens 1:2,5. Meist liegt es nicht oberhalb von 1:10. Bevorzugt liegt das Reckverhältnis im Bereich von 1:3 bis 1:6. Das Reckverhältnis in der Querrichtung beträgt ebenfalls im allgemeinen von 1:2,5 bis 1:10, bevorzugt von 1:3 bis 1:6.

Verfahren zum Verstrecken von Filamenten, Fasern oder Folien sind dem Fachmann bekannt (siehe z.B. US-A 3,456,044). In der Regel werden die Filamente, Fasern oder Folien oberhalb der Glasübergangstemperatur bzw. unterhalb deren Kristallitschmelztemperaturen der ihnen zugrundeliegenden biologisch abbaubaren Polymeren verstreckt. In einer bevorzugten Ausführungsform wird bei Temperaturen im Bereich von 0 bis 100, insbesondere von 5 bis 95°C verstreckt. Der Reckvorgang kann in einem oder in mehreren Schritten erfolgen.

Die Folien können z.B. durch Blasformen gereckt werden.

Dies kann man beispielsweise durch Führung von verfestigten Folien über Walzen mit unterschiedlicher Drehgeschwindigkeit erreichen. Bei biaxial orientierten Folien kann die Folie gleichzeitig oder in zwei Schritten über seitlich angebrachten Vorrichtungen, sogenannten Kluppenketten, in der Breite gereckt werden. Bei Schlauchfolien erfolgt die biaxiale Verstreckung in der Regel gleichzeitig während der Extrusion über der in der Blase eingeschlossenen Luft. Das Aufblasverhältnis gibt unter sonst konstanten Randbedingungen Auskunft über die Orientierung der Folie in Umfangsrichtung. Das Verhältnis der Abzugsgeschwindigkeiten des letzten zum ersten Walzenpaar gibt den Grad der Längsorientierung an.

Bei biaxial orientierten Schlauchfolien wird beispielsweise ein Druck von 1 bis 3 bar in den Schlauch gegeben, wobei der Druck sich nach den gewünschten Ausdehnungsmaßen der Folie richtet.

Um eine gute Reckbarkeit und reproduzierbare Kalibergenauigkeit (Durchmessergenauigkeit) bei biaxial orientierten Folien zu erzielen, ist es jedoch vorteilhaft, die Folien nach der schmelzflüssigen Austragung aus der Düse des Extruders in einer ersten Stufe auf Temperaturen von 0 bis 25°C, vorzugsweise 3 bis 10°C abzukühlen und anschließend in einer zweiten Stufe auf Temperaturen von 30 bis 95°C, vorzugsweise 50 bis 80°C zu erwärmen und anschließend zu recken.

Nach der Reckung der Folien können diese mit beheizten Walzen oder mit heißer Luft (ca. 75 bis 150°C, bevorzugt 100 bis 120°C) thermofixiert werden. Die Folien werden hierzu beispielsweise über Walzen durch einen geschlossenem Behälter mit temperiertem Luftstrom oder Dampfstrom hindurchgeführt. Die Verweilzeit beträgt üblicherweise 1 bis 20 s, vorzugsweise 2 bis 5 s.

Nach dem Reckvorgang können die Filamente, Fasern oder Folien mit gängigen Methoden oberflächenbehandelt werden. Durch Corona-, Flamm- oder Plasmabehandlung oder Behandlung mit oxidativ , anoder ablagernden Stoffen kann die Polarität der Oberfläche geändert werden, so daß die Filamente, Fasern oder Folien beispielsweise mehr oder weniger an Oberflächen haften können.

Die Dicke der nach dem erfindungsgemäßen Verfahren erhaltenen Filamente, Fasern oder Folien richtet sich nach dem beabsichtigten Verwendungszweck. Die Folien können z.B. eine Dicke im Bereich von 5 bis 150 µm aufweisen.

Überraschenderweise haben die nach dem erfindungsgemäßen Verfahren erhältlichen Filamente, Fasern oder Folien zwar erhöhte Standzeiten, ihre biologische Abbaubarkeit bleibt jedoch im Wesentlichen unverändert.

### Beispiele

### Anwendungstechnische Messungen:

Die Dicke der Folien wurde digital vermessen.

Die Streckspannung, die Reißfestigkeiten und die Reißdehnung wurden nach DIN 53 455-3 anhand von je 5 Probekörpern je Meßwert einer Breite von 4 mm und der in der Tabelle angegebenen Dicke bei einer Prüftemperatur von 23°C und einer Prüfgeschwindigkeit von 100 mm/min bestimmt.

### Die DSC Messungen wurden wie folgt ausgeführt:

Die Messungen wurden an den Proben im Anlieferungszustand und nach der Abkühlung aus der Schmelze (maximale Temperatur 180°C) mit einer Heiz- und Kühlrate von 20°C/min vorgenommen.

### Herstellung der unverstreckten Folie V1:

Die Herstellung des teilaromatischen Polyesters erfolgte in einer kontinuierlichen Produktionsanlage aus 45 mol-% Dimethylterephthalat, 55 mol-% Adipinsäure, 135 mol-% 1,4-Butandiol und 0,1 Gew.-% Glycerin. Als Katalysator wurde Tetrabutylorthotitanat eingesetzt. Der Anteil an aromatischer Komponente wurde durch ¹³C-NMR bestimmt und belief sich auf ein Verhältnis aromatischer zu aliphatischer Säure von 45,3 : 54,7. In der Schmelze wurde der so erhaltene Polyester mit 0,3 m-% Hexamethylendiisocyanat kettenverlängert. Der so erhaltene Polyester wies einen Schmelzpunkt von 108°C, eine Viskositätszahl von 230 (gemessen in O-Dichlorbenzol/Phenol, Gew.-Verhältnis 50/50, bei einer Konzentration von 0,5 Gew.-% Polymer und einer Temperatur von 25°C) und ein Molekulargewicht (Mn) von 23000 g/mol auf.

### Herstellung von verstreckten Folien F1 bis F3 und V1:

Der teilaromatische Polyester wurde unter Zugabe geringer Mengen Nukleierungs- und Trennmittel bei einer Massetemperatur von 150°C und einem Aufblasverhältnis von 2,5 : 1 auf einer Folienblasanlage verarbeitet. Für den Vergleichsversuch wurden Folien einer Dicke von ca 36 µm (siehe Tabelle) hergestellt. Für die erfindungsgemäßen Folien wurden zunächst Folien einer Dicke von ca. 70 µm hergestellt und zu den Folien F1 bis F3 (siehe Tabelle) verstreckt. Die Reckung erfolgte dabei ausgehend von einer Schlauchfolie, die zu einer Flachbahn zugeschnitten wurde, in einem seperaten Schritt. Die Temperatur der Reckstationen betrug 35°C. Die Reckverhältnisse waren 1 : 3 (F1), 1 : 4 (F2) und 1 : 5 (F3).

Die mechanischen Eigenschaften der Folien sind in Tabelle 1 wieder gegeben.

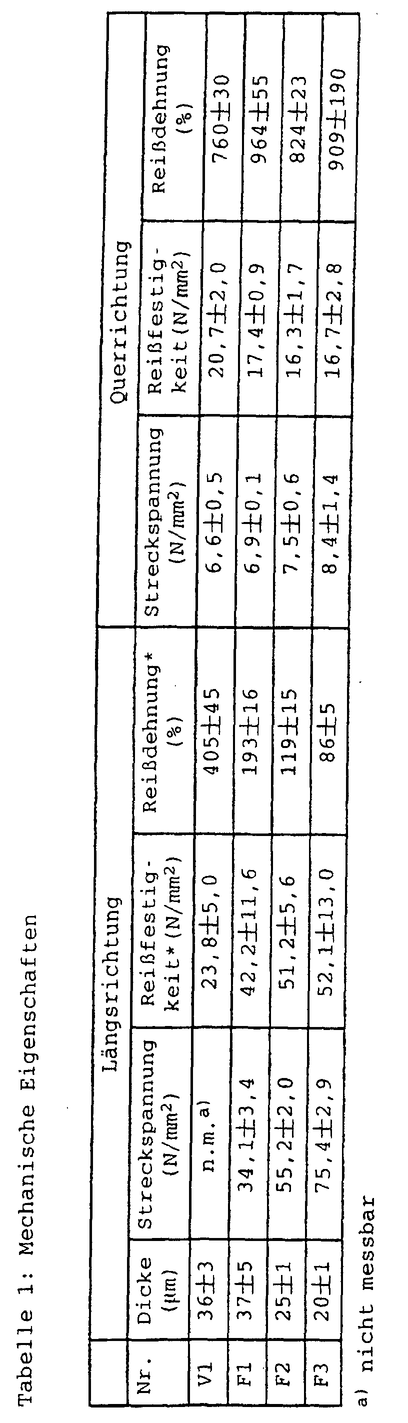

In Tabelle 2 sind die Ergebnisse der DSC-Untersuchungen zusammengefaßt.

**Tabelle 2:**

| DSC-Untersuchungen | | | | | | | | |
|---|---|---|---|---|---|---|---|---|
| Probe | Tg₁ (°C) | T_{M1} (°C) | ΔH₁ (J/g) | T_{KB} (°C) | T_{K} (°C) | Tg₂ (°c) | T_{M2} (°C) | ΔH₂ (J/g) |
| V1 | -32 | 111 | 31 | 89,9 | 69,8 | -32 | 115 | 24 |
| F1 | -26 | 111 | 36 | 91,6 | 72,8 | -31 | 118 | 24 |
| F2 | -23 | 113 | 38 | 93,2 | 72,5 | -32 | 118 | 24 |
| F3 | -21 | 118 | 42 | 92,4 | 72,4 | -31 | 118 | 27 |
| Tg₁ = Glastemperatur im Anlieferungszustand | | | | | | | | |
| T_{M1} = Schmelzpunkt im Anlieferungszustand | | | | | | | | |
| ΔH₁ = Schmelzwärme im Anlieferungszustand | | | | | | | | |
| T_{KB} = Temperatur des Kristallisationsbeginn | | | | | | | | |
| T_{K} = Temperatur des Kristallisationspeaks | | | | | | | | |
| Tg₂ = Glastemperatur einer aus der Schmelze mit 20°C/min abgekühlten Probe | | | | | | | | |
| T_{M2} = Schmelzpunkt einer aus der Schmelze mit 20°C/min abgekühlten Probe | | | | | | | | |
| ΔH₂ = Schmelzwärme einer aus der Schmelze mit 20°c/min abgekühlten Probe | | | | | | | | |

Aus Tabelle 2 geht hervor, daß die Glasübergangstemperaturen ebenso wie die Schmelzwärmen im Anlieferungszustand mit zunehmendem Reckgrad ansteigen. Dahingegen bleiben die Glasübergangstemperaturen und Schmelzwärmen von aus der Schmelze abgekühlten Proben in wesentlichen unverändert.

In Tabelle 3 sind die Ergebnisse der DSC-Untersuchungen an getemperten und ungetemperten Proben aufgeführt.

| Probe | 24 h Temperierung °c | Tg₁ (°c) | T_{M1} (°C) | ΔH₁ (J/g) | T_{KB} (°C) | T_{K} (°C) | Tg₂ (°c) | T_{M2} (°C) | ΔH₂ (J/g) |
|---|---|---|---|---|---|---|---|---|---|
| V1 | --- | -32 | 111 | 31 | 90 | 70 | -32 | 115 | 24 |
| | 70 | -31 | 112 | 28 | 92 | 70 | -31 | 116 | 23 |
| | 75 | -32 | 98 | 30 | 92 | 71 | -31 | 116 | 23 |
| F1 | --- | -26 | 111 | 36 | 92 | 73 | -31 | 118 | 24 |
| | 70 | -32 | 111 | 34 | 95 | 74 | -31 | 118 | 24 |
| | 75 | -33 | 97 | 33 | 96 | 74 | -32 | 119 | 22 |
| F2 | --- | -23 | 113 | 38 | 93 | 73 | -32 | 118 | 24 |
| | 70 | -31 | 113 | 35 | 93 | 74 | -32 | 118 | 23 |
| | 75 | -32 | 97 | 33 | 95 | 75 | -32 | 118 | 24 |
| F3 | --- | -21 | 118 | 42 | 92 | 72 | -31 | 118 | 27 |
| | 70 | -29 | 115 | 37 | 98 | 73 | -32 | 118 | 23 |
| | 75 | -32 | 97 | 35 | 93 | 75 | -32 | 118 | 25 |
| Tg₁ = Glastemperatur im Anlieferungszustand | | | | | | | | | |
| T_{M1} = Schmelzpunkt im Anlieferungszustand | | | | | | | | | |
| ΔH₁ = Schmelzwärme im Anlieferungszustand | | | | | | | | | |
| T_{KB} = Temperatur des Kristallisationsbeginn | | | | | | | | | |
| T_{K} = Temperatur des Kristallisationspeaks | | | | | | | | | |
| Tg₂ = Glastemperatur einer aus der Schmelze mit 20°C/min abgekühlten Probe | | | | | | | | | |
| T_{M2} = Schmelzpunkt einer aus der Schmelze mit 20°C/min abgekühlten Probe | | | | | | | | | |
| ΔH₂ = Schmelzwärme einer aus der Schmelze mit 20°c/min abgekühlten Probe | | | | | | | | | |

Aus Tabelle 3 wird deutlich, daß die Glasübergangstemperaturen und Schmelzwärmen Tg₁ und ΔH₁ durch die Temperierung abnehmen. Die Glasübertragungstemperaturen und Schmelzwärmen in Anlieferungszustand können als Maß für die Orientierung der Folien dienen. Diese nimmt durch Wärmeeinfluß ab (siehe Tg₂ und ΔH₂).

### Messungen der Standzeiten

Als Maß für die Standzeit dienten die Zeiten gefüllter Folienbeutel vom Zeitpunkt der Füllung bis zu dem Zeitpunkt, zu dem erste Schädigungen auftraten, z.B. Risse oder Löcher. Von Folien wurden Folienbeutel geschweißt. Jeder Beutel wurde mit 50 g geschnittener Karotten, Zwiebeln und Kohl gefüllt, verschlossen und bei Raumtemperatur aufbewahrt. Je fünf Beutel wurden pro Füllung untersucht. Nach acht Wochen wurde der Test abgebrochen. Die Ergebnisse der Untersuchungen sind in Tabelle 4 angegeben.

**Tabelle 4:**

| Standzeiten | | | | | | | | |
|---|---|---|---|---|---|---|---|---|
| Füllgut | Probe | Standzeit (Tage) | Probe | Standzeit (Tage) | Probe | Standzeit (Tage) | Probe | Standzeit (Tage) |
| Karotten | V1 | 10±3 | F1 | 25±3 | F2 | 42±6 | F3 | > 54 |
| Zwiebeln | | 15±3 | | 29±5 | | 48±4 | | > 54 |
| Kohl | | 14±4 | | 33±7 | | > 54 | | > 54 |

### Biologischer Abbau

Um den biologischen Abbau der Folien zu untersuchen, wurden jeweils Folien im Vakuum bei 30°C 16 Stunden lang getrocknet und gewogen. Die Proben wurden dann im Kompost (Kompost aus der Nachrottephase des Kompostwerkes Mutterstadt) eingegraben und bei 55°C inkubiert. Nach 14, 21 und 28 Tagen wurden jeweils Proben herausgenommen, mit destilliertem Wasser gewaschen und im Vakuum 16 Stunden bei 30°C getrocknet. Anschließend wurden die Proben gewogen. Der Gewichtsverlust diente als Maß für den Abbau der Proben. Tabelle 5 gibt die gefundenen Werte wieder.

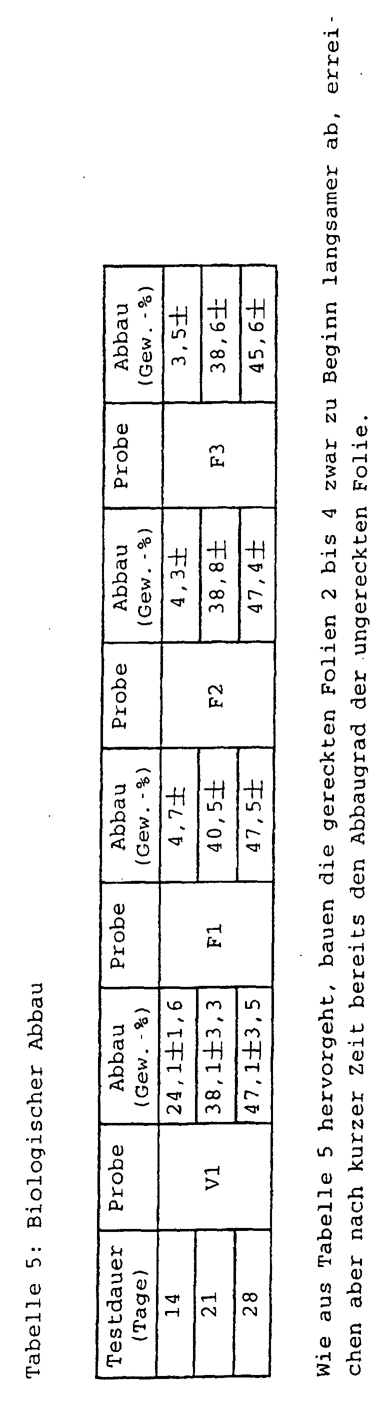

## Patentansprüche

1. Verfahren zur Verbesserung der Standzeit von Filamenten; Fasern oder Folien auf der Basis biologisch abbaubarer Polyester mit einem Molekulargewicht (Mₙ) im Bereich von 5000 bis 50000 g/mol, mit einer Viskositätszahl im Bereich von 50 bis 400 g/ml (gemessen in o-Dichlorbenzol/Phenol, Gew.-Verhältnis 50/50, bei einer Konzentration von 0,5 Gew.-% Polymer und einer Temperatur von 25°C) und einem Schmelzpunkt im Bereich von 60 bis 170°C, enthaltend als wesentliche Komponenten
A) eine Säurekomponente aus
a1) 30 bis 95 mol-% mindestens einer aliphatischen oder mindestens einer cycloaliphatischen Dicarbonsäure oder deren esterbildende Derivate oder Mischungen davon
a2) 5 bis 70 mol% mindestens einer aromatischen Dicarbonsäure oder deren esterbildendem Derivat oder Mischungen davon und
a3) 0 bis 5 mol% einer sulfonatgruppenhaltigen Verbindung,
B) eine Diolkomponente ausgewählt aus mindestens einem C₂-bis C₁₂-Alkandiol und mindestens einem C₅- bis C₁₀-Cycloalkandiol oder Mischungen davon
und gewünschtenfalls darüber hinaus eine oder mehrere Komponenten ausgewählt aus
C) einer Komponente ausgewählt aus
c1) mindestens einer Etherfunktionen enthaltenden Dihydroxyverbindung der Formel I
HO-[(CH₂)ₙ-O]ₘ-H (I)
in der n für 2, 3 oder 4 und m für eine ganze Zahl von 2 bis 250 stehen,
c2) mindestens einer Hydroxycarbonsäure oder Formel IIa oder IIb
HO-[-C(O)-G-O-]ₚH (IIa) 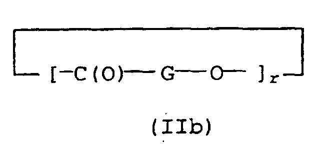
in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
c3) mindestens einem Amino-C₂- bis C₁₂-alkanol oder mindestens einem Amino-C₅-bis C₁₀-cycloalkanol oder Mischungen davon
c4) mindestens einem Diamino-C₁- bis C₈-Alkan
c5) mindestens einem 2,2'-Bisoxazolins der allgemeinen Formel III 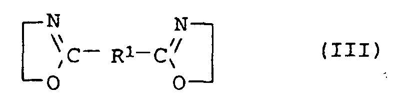 wobei R¹ eine Einfachbindung, eine (CH₂)_{z}-Alkylengruppe, mit z = 2, 3 oder 4, oder eine Phenylengruppe bedeutet
c6) mindestens einer Aminocarbonsäure ausgewählt aus der Gruppe, bestehend aus den natürlichen Aminosäuren, Polyamiden mit einem Molekulargewicht von höchstens 18000g/mol, erhältlich durch Polykondensation einer Dicarbonsäure mit 4 bis 6 C-Atomen und einem Diamin mit 4 bis 10 C-Atomen, Verbindungen der Formeln IV a und IVb
HO-[-C(O)-T-N(H)-]ₛH (IVa) 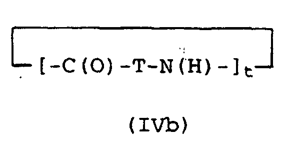
in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ₙ-, wobei n eine ganze Zahl von 1 bis 12 bedeutet, -C(R²)H- und -C(R²)HCH₂, wobei R² für Methyl oder Ethyl steht,
und Polyoxazolinen mit der wiederkehrenden Einheit V 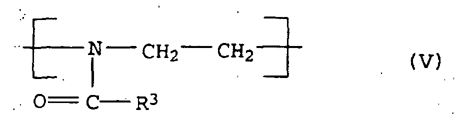 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
oder Mischungen aus c1) bis c6)
und
D) einer Komponente ausgewählt aus
d1) mindestens einer Verbindung mit mindestens drei zur Esterbildung befähigten Gruppen,
d2) mindestens eines Isocyantes
d3) mindestens eines Divinylethers
oder Mischungen aus d1) bis d3),
**dadurch gekennzeichnet, daß** man die Filamente, Fasern oder Folien bei oder nach deren Herstellung verstreckt.

2. Verfahren nach Anspruch 1, **dadurch gekennzeichnet, daß** das Reckverhältnis mindestens 1 : 2,5 beträgt.

3. Verfahren nach Anspruch 1 oder 2, **dadurch gekennzeichnet, daß** das Reckverhältnis von 1 : 3 bis 1: 6 beträgt.

4. Verwendung verstreckter biologisch abbaubarer Polyester, wie in Anspruch 1 definiert, zur Herstellung von Filamenten, Fasern oder Folien mit verbesserter Standzeit.

5. Verwendung verstreckter biologisch abbaubarer Polyester, wie in Anspruch 1 definiert, zur Herstellung von Beuteln.

## Claims

1. A process for improving the use life of filaments, fibers and films based on biodegradable polyesters having a molecular weight (Mn) within the range from 5000 to 50,000 g/mol, with a viscosity number within the range from 50 to 400 g/ml (measured in o-dichlorobenzene/phenol; weight ratio 50/50, at a concentration of 0.5% by weight of polymer and a temperature of 25°C) and a melting point within the range from 60 to 170 containing as essential components
A) an acid component comprising
a1) from 30 to 95 mol% of at least one aliphatic or at least one cycloaliphatic dicarboxylic acid or its ester-forming derivatives or mixtures thereof
a2) from 5 to 70 mol% of at least one aromatic dicarboxylic acid or its ester-forming derivative or mixtures thereof and
a3) from 0 to 5 mol% of a sulfonate compound,
B) a diol component selected from at least one C₂-C₁₂-alkanediol and at least one C₅-C₁₀-cycloalkanediol or mixtures thereof
and if desired additionally one or more components selected from
C) a component selected from
c1) at least one dihydroxy compound which contains ether functions and has the formula I
HO-[(CH₂)ₙ-O]ₘ-H (I)
where n is 2, 3 or 4 and m is an integer from 2 to 250,
c2) at least one hydroxycarboxylic acid of the formula IIa or IIb
HO-[-C(O)-G-O-]ₚH (IIa) 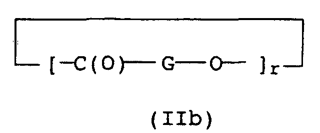
where p is an integer from 1 to 1500, r is an integer from 1 to 4, and G is a radical selected from the group consisting of phenylene, -(CH₂)_{q}-, where q is an integer from 1 to 5, -C(R)H- and -C(R)HCH₂, where R is methyl or ethyl
c3) at least one amino-C₂-C₁₂-alkanol or at least one amino-C₅-C₁₀-cycloalkanol or mixtures thereof
c4) at least one diamino-C₁-C₈-alkane
c5) at least one 2,2'-bisoxazoline of the general formula III 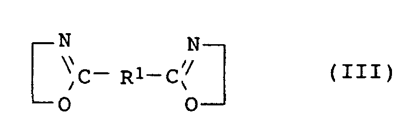 where R¹ is a single bond, a (CH₂)_{z} alkylene group where z = 2, 3 or 4, or a phenylene group
c6) at least one aminocarboxylic acid selected from the group consisting of the natural amino acids, polyamides having a molecular weight of not more than 18000 g/mol, obtainable by polycondensation of a dicarboxylic acid having from 4 to 6 carbon atoms and a diamine having from 4 to 10 carbon atoms, compounds of the formulae IVa and IVb
HO-[-C(O)-T-N(H)-]ₛH (IVa) 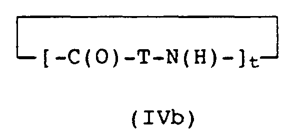
where s is an integer from 1 to 1500, t is an integer from 1 to 4 and T is a radical selected from the group consisting of phenylene, -(CH₂)ₙ-, where n is an integer from 1 to 12, -C(R²)H- and -C(R²)HCH₂, where R² is methyl or ethyl,
and polyoxazolines containing the repeat unit V 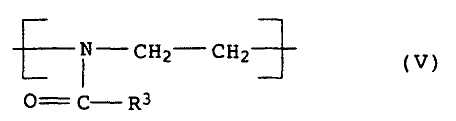 where R³ is hydrogen, C₁-C₆-alkyl, C₅-C₈-cycloalkyl, unsubstituted or C₁-C₄-alkyl-monosubstituted, -disubstituted or -trisubstituted phenylene or is tetrahydrofuryl,
or mixtures of c1) to c6)
and
D) a component selected from
d1) at least one compound having at least three groups capable of ester formation,
d2) at least one isocyanate
d3) at least one divinyl ether
or mixtures of d1) to d3),
which comprises drawing the filaments, fibers and films in the course of or following their production.

2. A process as claimed in claim 1, wherein the draw ratio is not less than 2.5 : 1.

3. A process as claimed in claim 1 or 2, wherein the draw ratio is within the range from 3 : 1 to 6 : 1.

4. The use of drawn biodegradable polymers for producing filaments, fibers and films having an improved use life.

5. The use of drawn biodegradable polyesters as defined in claim 1 for producing bags.

## Revendications

1. Procédé pour allonger la durée de vie de filaments, de fibres ou de feuilles à base de polyesters biodégradables d'un poids moléculaire (Mₙ) de l'ordre de 5000 à 50000 g/mole, d'un indice de viscosité de l'ordre de 50 à 400 g/ml (mesuré dans du o-dichlorobenzène/phénol, rapport pondéral 50/50, à une concentration de 0,5% en poids de polymère et à une température de 25°C) et d'un point de fusion de l'ordre de 60 à 170°C, contenant comme principaux composants:
A) un composant acide à base de
a1) 30 à 95% molaires d'au moins un acide dicarboxylique aliphatique ou d'au moins un acide dicarboxylique cycloaliphatique, ou de leurs dérivés estérogènes, ou de leurs mélanges,
a2) 50 à 70% molaires d'au moins un acide dicarboxylique aromatique ou de son dérivé estérogène ou de leurs mélanges, et
a3) 0 à 5% molaires d'un composé contenant un groupe sulfonate,
B) un composant diol choisi parmi au moins un alcanediol en C₂ à C₁₂ et au moins un cycloalcanediol en C₅ à C₁₀, ou leurs mélanges,
et éventuellement en outre un ou plusieurs composants choisis parmi
C) un composant choisi parmi
c1) au moins un composé dihydroxylé contenant une fonction éther, de la formule I
HO-[(CH₂)ₙ-O]ₘ-H (I)
dans laquelle n a une valeur de 2, 3 ou 4 et m est un nombre entier d'une valeur de 2 à 250,
c2) au moins un acide hydroxycarboxylique de la formule IIa ou IIb
HO-[-C(O)-G-O-]ₚH (IIa) 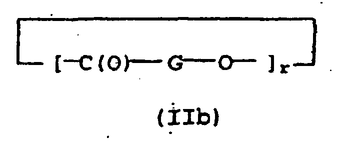
où p est un nombre entier de 1 à 1500 et r est un nombre entier de 1 à 4, et G représente un reste choisi dans le groupe formé par des radicaux phénylène, -(CH₂)_{q}-, où q est un nombre entier de 1 à 5, -C(R)H- et -C®HCH₂, où R représente un radical méthyle ou éthyle,
c3) au moins un alcanol aminé en C₂ à C₁₂ ou au moins un cycloalcanol aminé en C₅ à C₁₀, ou leurs mélanges,
c4) au moins un diaminoalcane en C₁ à C₈,
C₅) au moins une 2,2'-bisoxazoline de la formule générale III 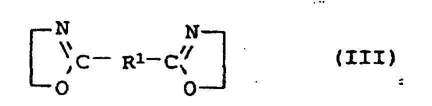 dans laquelle R¹ représente une liaison simple, un groupe alkylène (CH₂)₂, avec z = 2, 3 ou 4, ou un groupe phénylène,
c6) au moins un acide aminocarboxylique choisi dans le groupe formé par les acides aminés naturels, des polyamides d'un poids moléculaire d'un maximum de 18000 g/mole, que l'on peut obtenir par polycondensation d'un acide dicarboxylique comportant de 4 à 6 atomes de C et d'une diamine comportant de 6 à 10 atomes de C, des composés des formules IV a et IV b
HO-[-C(O)-T-N(H)-]ₛH (IVa) 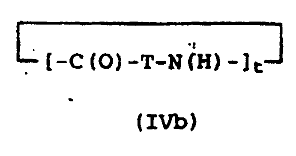
dans lesquelles a est un nombre entier de 1 à 1500 et t un nombre entier de 1 à 4, et T représente un reste choisi dans le groupe formé par des radicaux phénylène, -(CH₂)ₙ-, où n est un nombre entier de 1 à 12, -C(R²)H- et -C(R²)HCH₂, où R² représente un radical méthyle ou éthyle,
et des polyoxazolines comprenant des unités répétitives V 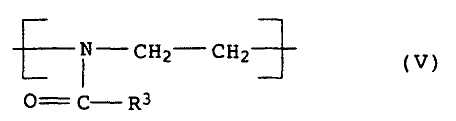 où R³ représente de l'hydrogène ou un radical alkyle en C₁ à C₆, cycloalkyle en C₅ à C₈, phényle non substitué ou substitué de 1 à 3 fois par des radicaux alkyle en C₁ à C₄ ou tétrahydrofuryle,
ou des mélanges de c1) à c6)
et
D) un composant choisi parmi
d1) au moins un composé comportant au moins trois groupes estérifiables,
d2) au moins un isocyanate,
d3) au moins un éther divinylique,
ou des mélanges de d1) à d3),
**caractérisé en ce que** les filaments, les fibres ou les feuilles sont étirés pendant ou après leur préparation.

2. Procédé selon la revendication 1, **caractérisé en ce que** le rapport d'étirage est d'au moins 1: 2,5.

3. Procédé selon la revendication 1 ou 2, **caractérisé en ce que** le rapport d'étirage est de 1: 3 à 1: 6.

4. Utilisation de polyesters étirés biodégradables, comme définis dans la revendication 1, pour la production de filaments, de fibres ou de feuilles à durée de vie prolongée.

5. Utilisation de polyesters étirés biodégradables, comme définis dans la revendication , pour la production de sacs.
